# EUROPEAN PATENT APPLICATION

(11) **EP 4 672 152 A1**
(43) Date of publication of application: **31.12.2025**
(21) Application number: 25182348.0
(22) Date of filing: 12.06.2025
(51) Int. Cl.: G06T 11/00

(54) **TRANS-AXIAL TRUNCATION COMPENSATION FOR CT IMAGING**

(30) Priority: 28.06.2024 US 202418757638
(71) Applicant: Accuray LLC, Madison, WI 53717 (US)
(72) Inventor: Bai, Chuanyong, Madison, Wisconsin, 53717 (US); Gagnon, Daniel, Madison, Wisconsin, 53717 (US); Yu, Zhicong, Madison, Wisconsin, 53717 (US)
(74) Representative: Grünecker Patent- und Rechtsanwälte PartG mbB

(57) **Abstract**

Imaging apparatuses described herein include a radiation source configured for imaging radiation, a radiation detector positioned to receive radiation from the radiation source, and an image processing system. The image processing system is configured to: receive projection data from the radiation detector, the projection data corresponding to a scan field-of-view (scanFOV), the image being trans-axially truncated; identify a final reconstruction field-of-view (reconFOV) that is larger than the scanFOV; reconstruct an image having a reconstruction field-of-view (reconFOVₙ), wherein reconFOVₙ is less than reconFOV; generate a progressive refinement for the image; reproject the image with the progressive refinement thereby generating a virtual scan vscanFOVₙ; refine the virtual scan vscanFOVₙ data; and repeat the reconstruction, generation of the progressive refinement, and reprojection for one or more subsequent reconstructions until reconFOV is reached.

## Description

### FIELD OF THE INVENTION

Aspects of the disclosed technology relate to trans-axial truncation compensation for computed tomography (CT) imaging. More particularly, the disclosed technology relates to progressive data estimation for truncation compensation.

### BACKGROUND

Trans-axial data truncation is commonly observed in computed tomography (CT) scans due to patient size, patient positioning, and a limited field-of-view (FOV), which is determined by bore size, radiation detector size, and imaging geometry. To reduce the truncation, the effective imaging FOV can be increased through hardware enhancements (e.g., increasing the bore size and/or the detector size) or through the use of special imaging geometry and reconstruction software (e.g., using an offset detector or through multiple scans with different imaging geometry).

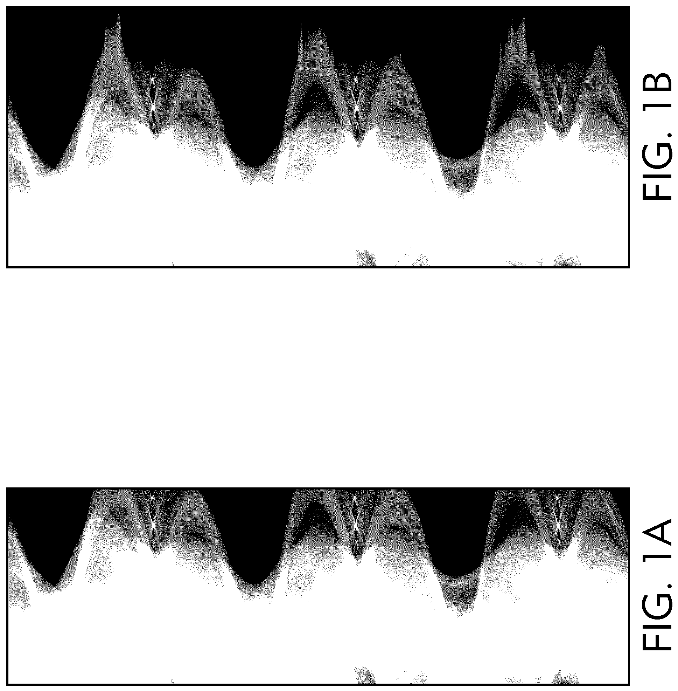

Data-driven truncation compensation is commonly used in clinical CT imaging. In order to estimate the truncated data, the truncation projection data is typically estimated to a predefined range. For example, in FIG. 1, which illustrates a sinogram of a helical CT scan in which the patient was positioned with arms down during the scan, and the patient's arms were truncated. In FIG. 1, a conventional data-driven truncation compensation method was used to estimate the truncated data for approximately 6 cm beyond the truncated edge. However, as shown in FIG. 1, the estimated data was very different from what would be visually expected from the sinogram display, and the further from the truncated edge, the greater the difference in data, suggesting that the estimation accuracy decreased with increasing distance from the edge.

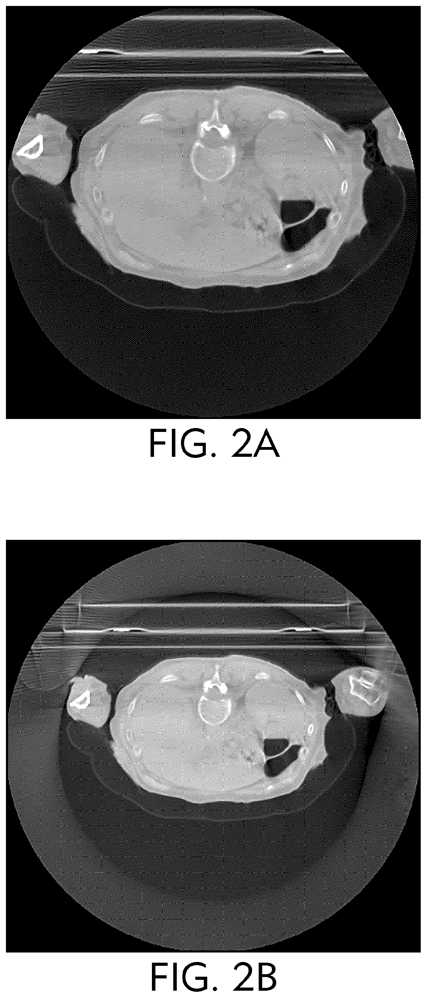

Following the truncation compensation, the data was used to reconstruct the CT image, as shown in FIGS. 2A and 2B. FIG. 2A is the conventionally reconstructed image in which the reconstruction FOV is the same as the scan FOV, such that the truncation compensation is primarily used to reduce truncation-induced artifacts within the scanning FOV. In FIG. 2B, however, the image was reconstructed with a reconstruction FOV that is greater than the scanning FOV. As seen in FIG. 2B, the shapes of the truncated objects (e.g., the patient's arms and couch) are partially recovered, but the accuracy is compromised and there are undesirable artifacts in the reconstructed band. Here, reconstructed band refers to the ring-shaped band area bounded by the scan FOV radius and the enlarged reconstruction FOV radius.

Accordingly, there remains a need for alternative methods for truncation reconstruction.

### BRIEF SUMMARY

According to a first aspect of the present disclosure, an imaging apparatus, comprises a rotatable gantry system positioned at least partially around a patient support; a radiation source coupled to the rotatable gantry system, the radiation source configured for imaging radiation; a radiation detector coupled to the rotatable gantry system and positioned to receive radiation from the radiation source; and an image processing system. The image processing system is configured to: receive projection data from the radiation detector, the projection data corresponding to a scan field-of-view (scanFOV), wherein an image reconstructed from the projection data has a reconstruction field-of-view reconFOV₀ that is the same as scanFOV, and the image is trans-axially truncated; identify a final reconstruction field-of-view (reconFOV) that is larger than the scanFOV; reconstruct an image having a reconstruction field-of-view (reconFOVₙ) using projection data from a virtual scan that precedes the reconstruction (vscanFOVₙ₋₁) and estimated data between the vscanFOVₙ₋₁ and vscanFOVₙ, wherein reconFOVₙ is less than reconFOV; generate a progressive refinement for the image; reproject the image with the progressive refinement thereby generating a virtual scan vscanFOVₙ; refine the virtual scan vscanFOVₙ data; and repeat the reconstruction, generation of the progressive refinement, and reprojection for one or more subsequent reconstructions until reconFOV is reached.

In a second aspect, an imaging apparatus comprises the imaging apparatus of the previous aspect, wherein the image processing system is configured to generate the progressive refinement for the image by adjusting pixel values of the estimated data using information regarding a subject of the imaging.

In a third aspect, an imaging apparatus comprises the imaging apparatus of any of the previous aspects, wherein the information regarding the subject of the imaging comprises information regarding estimated pixel values corresponding to bone, soft tissue, the patient support, and metal.

In a fourth aspect, an imaging apparatus comprises the imaging apparatus of any of the previous aspects, wherein the imaging processing system is configured to generate the progressive refinement for the image reconFOVₙ by adjusting pixel values using the reconstructed image from a preceding reconstruction reconFOVₙ₋₁.

In a fifth aspect, an imaging apparatus comprises the imaging apparatus of any of the previous aspects, wherein the image processing system is further configured to determine a number of progressive refinements based on the difference between reconFOV and scanFOV.

In a sixth aspect, an imaging apparatus comprises the imaging apparatus of any of the previous aspects, wherein the number of progressive refinements is greater than one.

In a seventh aspect, an imaging apparatus comprises the imaging apparatus of any of the previous aspects, wherein the image processing system is further configured to reconstruct a first progressive image over a first reconstruction field-of-view (reconFOV₁) from the projection data corresponding to the scanFOV, wherein a difference between vscanFOV₁ and scanFOV corresponds to a first refinement segment of the image.

In an eighth aspect, an imaging apparatus comprises the imaging apparatus of any of the previous aspects, wherein the image processing system is further configured to reconstruct a final image having reconFOV, wherein the final image is not trans-axially truncated.

In a ninth aspect, an imaging apparatus comprises the imaging apparatus of any of the previous aspects, refining the virtual scan vscanFOVₙ data comprises using curvature of a sinogram of projection data from a virtual scan that precedes the reconstruction (vscanFOVₙ₋₁) to adjust a shape of estimated projection data for vscanFOVₙ.

In a tenth aspect, a multimodal imaging apparatus comprising the imaging apparatus of any of the previous aspects.

In an eleventh aspect, an image processing method comprises receiving projection data from a radiation detector, the projection data corresponding to a scan field-of-view (scanFOV), wherein an image reconstructed from the projection data has a reconstruction field-of-view (reconFOV₀) that is the same as scanFOV, and the image is trans-axially truncated; identifying a final reconstruction field-of-view (reconFOV) that is larger than the scanFOV; reconstructing an image having a reconstruction field-of-view (reconFOVₙ) using projection data from a virtual scan that precedes the reconstruction (vscanFOVₙ₋₁) and estimated data between the vscanFOVₙ₋₁ and vscanFOVₙ, wherein reconFOVₙ is less than reconFOV, and reconFOVₙ is equal to vscanFOVₙ; generating a progressive refinement for the image; reprojecting the image with the progressive refinement thereby generating a virtual scan vscanFOVₙ; refining the virtual scan vscanFOVₙ data; and repeating the reconstructing, generating the progressive refinement, and reprojecting for one or more subsequent reconstructions until reconFOV is reached.

In a twelfth aspect, an image processing method comprises the image processing method of the eleventh aspect, wherein generating the progressive refinement for the image comprises adjusting pixel values of the estimated data using information regarding a subject of the imaging.

In a thirteenth aspect, an image processing method comprises the image processing method of the eleventh or twelfth aspects, wherein the information regarding the subject of the imaging comprises information regarding estimated pixel values corresponding to bone, soft tissue, the patient support, and metal.

In a fourteenth aspect, an image processing method comprises the image processing method of any of the eleventh through thirteenth aspects, wherein generating the progressive refinement for the image reconFOVₙ by adjusting pixel values using the reconstructed image from a preceding reconstruction reconFOVₙ₋₁.

In a fifteenth aspect, an image processing method comprises the image processing method of any of the eleventh through fourteenth aspects, wherein generating the progressive refinement for the image reconFOVₙ comprises adjusting a shape of an object recovered in the image using body surface curvature information from vscanFOVₙ₋₁.

In a sixteenth aspect, an image processing method comprises the image processing method of any of the eleventh through fifteenth aspects, wherein the image processing method further comprises determining a number of progressive refinements based on the difference between reconFOV and scanFOV.

In a seventeenth aspect, an image processing method comprises the image processing method of any of the eleventh through sixteenth aspects, wherein the number of progressive refinements is greater than one.

In an eighteenth aspect, an image processing method comprises the image processing method of any of the eleventh through seventeenth aspects, wherein the image processing method further comprises reconstructing a first progressive image over a first reconstruction field-of-view (reconFOV₁) from the projection data corresponding to the scanFOV, wherein a difference between vscanFOV₁ and scanFOV corresponds to a first refinement segment.

In a nineteenth aspect, an image processing method comprises the image processing method of any of the eleventh through eighteenth aspects, wherein the image processing method further comprises reconstructing a final image having reconFOV, wherein the final image is not trans-axially truncated.

In a twentieth aspect, an image processing method comprises the image processing method of any of the eleventh through nineteenth aspects, wherein refining the virtual scan vscanFOVₙ data comprises using curvature of a sinogram of projection data from a virtual scan that precedes the reconstruction (vscanFOVₙ₋₁) to adjust a shape of estimated projection data for vscanFOVₙ.

Features that are described and/or illustrated with respect to one embodiment may be used in the same way or in a similar way in one or more other embodiments and/or in combination with or instead of the features of other embodiments.

The descriptions of the invention do not limit the words used in the claims in any way or the scope of the claims or invention. The words used in the claims have all of their full ordinary meanings.

### BRIEF DESCRIPTION OF THE DRAWINGS

In the accompanying drawings, which are incorporated in and constitute a part of the specification, various aspects of the invention are illustrated, which, together with a general description of the invention given above, and the detailed description given below, serve to exemplify embodiments of this invention. It will be appreciated that illustrated element boundaries (e.g., boxes, groups of boxes, or other shapes) in the figures represent one embodiment of boundaries. In some embodiments, one element may be designed as multiple elements or that multiple elements may be designed as one element. In some embodiments, an element shown as an internal component of another element may be implemented as an external component and vice versa. Furthermore, elements may not be drawn to scale. In the drawings:
FIG. 1A is a sinogram of a helical CT scan using an offset panel detector in which the data is trans-axially truncated;
FIG. 1B is the sinogram of FIG. 1 including estimated truncated data outside of the truncation edge obtained according to a conventional truncation estimation method;
FIG. 2A is an image reconstructed from the data of FIG. 1A, showing the truncation of the patient's arm;
FIG. 2B is an image reconstructed from the data of FIG. 1B, showing that the shapes are partially reconstructed but included unwanted artifacts;
FIG. 3 is a diagrammatic illustration of an example imaging apparatus in accordance with one or more aspects shown and described herein;
FIG. 4 is a block flow chart of an image processing method in accordance with one or more aspects shown and described herein;
FIG. 5 is an image reconstructed from projection data obtained from a patient scan and illustrating the trans-axial truncation of the image;
FIG. 6 is an image of a reconstructed band between a scan field-of-view (scanFOV) and a reconstruction field-of-view (reconFOV) for a first progressive step prior to progressive refinement in accordance with one or more aspects shown and described herein;
FIG. 7 is a sinogram corresponding to the projection data used in construction of the image of FIG. 6 and illustrating the progressive bands in accordance with one or more aspects shown and described herein;
FIG. 8 is an image of the reconstructed band of FIG. 6 following progressive refinement in accordance with one or more aspects shown and described herein; and
FIG. 9 is an image reconstructed from the original projection data following processing according to the image processing method in accordance with one or more aspects shown and described herein.

### DETAILED DESCRIPTION

The following includes definitions of exemplary terms that may be used throughout the disclosure. Both singular and plural forms of all terms fall within each meaning.

"Component," as used herein can be defined as a portion of hardware, a portion of software, or a combination thereof. A portion of hardware can include at least a processor and a portion of memory, wherein the memory includes an instruction to execute. A component may be associated with a device.

"Logic," synonymous with "circuit" as used herein, includes but is not limited to hardware, firmware, software and/or combinations of each to perform a function(s) or an action(s). For example, based on a desired application or needs, logic may include a software-controlled microprocessor, discrete logic such as an application specific integrated circuit (ASIC), or other programmed logic device and/or controller. Logic may also be fully embodied as software.

"Processor," as used herein includes, but is not limited to, one or more of virtually any number of processor systems or stand-alone processors, such as microprocessors, microcontrollers, central processing units (CPUs), and digital signal processors (DSPs), in any combination. The processor may be associated with various other circuits that support operation of the processor, such as random access memory (RAM), read-only memory (ROM), programmable read-only memory (PROM), erasable programmable read-only memory (EPROM), clocks, decoders, memory controllers, or interrupt controllers, etc. These support circuits may be internal or external to the processor or its associated electronic packaging. The support circuits are in operative communication with the processor. The support circuits are not necessarily shown separate from the processor in block diagrams or other drawings.

"Signal," as used herein includes, but is not limited to, one or more electrical signals, including analog or digital signals, one or more computer instructions, a bit or bit stream, or the like.

"Software", as used herein, includes but is not limited to one or more computer readable and/or executable instructions that cause a computer, processor, logic, and/or other electronic device to perform functions, actions, and/or behave in a desired manner. The instructions may be embodied in various forms such as routines, algorithms, modules, or programs including separate applications or code from dynamically linked sources or libraries.

Various aspects described herein relate to imaging devices and methods, and specifically, to truncation compensation methods and imaging apparatuses employing the same. In various aspects, an image processing system is configured to receive projection data from a radiation detector, with the projection data corresponding to a scan field-of-view (scanFOV), and an image reconstructed from the projection data being trans-axially truncated. The image processing system is further configured to identify a final reconstruction field-of-view (reconFOV) that is larger than the scanFOV and progressively reconstruct an image having a reconstruction field-of-view (reconFOVₙ) using projection data from a virtual scan that precedes the reconstruction (vscanFOVₙ₋₁) and estimated data between the vscanFOVₙ₋₁ and reconFOVₙ. For the first progressive reconstruction with reconFOV₁, the corresponding virtual scan data vscanFOV₀ is the original scan data, i.e., vscanFOV₀ is equal to scanFOV. The progressive refinements for the estimated data are generated and reprojected until reconFOV is reached. The progressive approach to image reconstruction and estimation of truncated data may lead to values in each band being adjusted prior to reprojection to enable an estimation of truncated data and recovery of the object shape outside of the scanFOV with improved accuracy.

### Imaging Apparatus

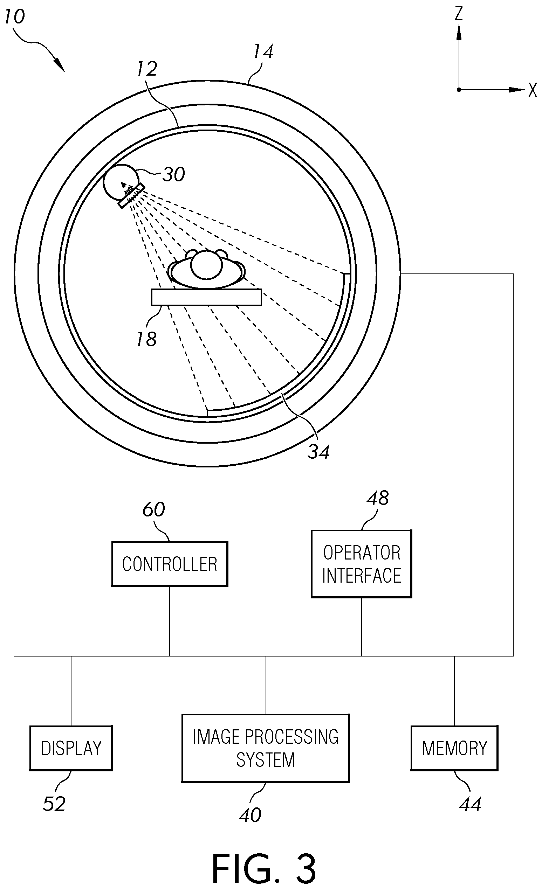

In any of the aspects disclosed herein, an imaging apparatus may be configured as the imaging apparatus 10, as shown in FIG. 3. The imaging apparatus 10 includes a rotatable gantry system, referred to as gantry 12, supported by or otherwise housed in a support unit or housing 14. The term "gantry," as used herein, refers to a gantry system that comprises one or more gantries (e.g., ring or C-arm) capable of supporting one or more radiation sources and/or associated detectors as they rotate around a target. For example, a radiation source and its associated detector may be mounted to a gantry of the gantry system.

A patient support 18 is positioned adjacent to the rotatable gantry 12 and configured to support a patient, typically in a horizontal position, for longitudinal movement into and within the rotatable gantry 12. The patient support 18 can move the patient, for example, in a direction perpendicular to the plane of rotation of the gantry 12 (along or parallel to the rotation axis of the gantry 12). The patient support 18 can be operatively coupled to a patient support controller for controlling movement of the patient and patient support 18. The patient support controller can be synchronized with the rotatable gantry 12 and source of radiation mounted to the rotating gantry for rotation about a patient longitudinal axis in accordance with a commanded imaging plan. The patient support can also be moved in a limited range up and down, left and right once it is in the bore 16 to adjust the patient position for optimal treatment. Axes x and z are shown, where, viewing from the front of the gantry 12, the x-axis is horizontal and points to the right, the *y*-axis (not shown) points into the gantry plane, and the z-axis is vertical and points to the top. The *x-, y-,* and *z*-axes follow the right-hand rule.

As shown in FIG. 3, the imaging apparatus 10 includes a radiation source 30 coupled to or otherwise supported by the rotatable gantry 12. The radiation source can be any type of transmission source suitable for imaging. For example, the radiation source 30 may be, for example, an x-ray generating source (including for CT) or any other way to produce photons with sufficient energy and flux (such as, e.g., a gamma-source (e.g., Cobalt-57, energy peak at 122 keV), an x-ray fluorescence source (such as fluorescence source through Pb k lines, two peaks @about 70 keV and @about 82 keV), etc.). The source of radiation may be an x-ray source, configured as a kilovoltage (keV) source (e.g., a clinical x-ray source having a voltage in the range of about 20 keV to about 150 keV) or as megavoltage (meV) source. In aspects, when the radiation source 30 is configured as a keV source of radiation, the keV source of radiation may comprise a kilo-electron volt peak photon energy (keV) up to 150 keV. Although various aspects are described with reference to x-ray, x-ray imaging, x-ray imaging source, and the like, other imaging transmission sources can be used interchangeably, depending on the particular implementation.

A radiation detector 34 (e.g., an x-ray detector) can be coupled to or otherwise supported by the rotatable gantry 12. The radiation detector 34 may be a two-dimensional flat detector, a curved detector, or any other type of radiation detector known and used in the art. In any of the aspects disclosed herein, the radiation detector may be a one-dimensional (1-D) radiation detector. The radiation detector 34 is positioned to receive radiation from the radiation source 30 and can rotate along with the radiation source 30. The radiation detector 34 is configured to detect or otherwise measure the amount of radiation not attenuated and therefore infer what was in fact attenuated by the patient or associated patient ROI (by comparison to what was initially generated). The radiation detector 34 can detect or otherwise collect attenuation data from different angles as the radiation source 30 rotates around and emits radiation toward the patient.

Although FIG. 3 depicts an imaging apparatus 10 with a radiation source 30 mounted to a ring gantry 12, other embodiments may include other types of rotatable imaging apparatuses, including, for example, C-arm gantries and robotic arm-based systems. In gantry-based systems, a gantry rotates the radiation source 30 around an axis passing through the isocenter. Gantry-based systems include C-arm gantries, in which the radiation source 30 is mounted, in a cantilever-like manner, over and rotates about the axis passing through the isocenter. Gantry-based systems further include ring gantries, for example, rotatable gantry 12, having generally toroidal shapes in which the patient's body extends through a bore of the ring/toroid, and the imaging radiation source 30 is mounted on the perimeter of the ring and rotates about the axis passing through the isocenter. In aspects, the gantry 12 rotates continuously. In other aspects, the gantry 12 utilizes a cable-based system that rotates and reverses repeatedly.

In various aspects, an image processing system 40 may be operatively coupled to the radiation detector 34. The image processing system 40 is configured to generate patient images based on radiation received by the radiation detector 34 from the radiation source 30. It will be appreciated that the image processing system 40 can be configured to be used to carry out the methods described more fully below. The imaging apparatus 10 can also include a memory 44 suitable for storing information, including, but not limited to, processing and reconstruction algorithms and software, imaging parameters, image data from a prior or otherwise previously-acquired image, and the like.

The imaging apparatus 10 can further include an operator/user interface 48, where an operator of the imaging apparatus 10 can interact with or otherwise control the imaging apparatus 10 to provide input relating to scan or imaging parameters and the like. The operator interface 48 can include any suitable input devices, such as a keyboard, mouse, voice-activated controller, or the like. The imaging apparatus 10 can also include a display 52 or other human-readable element to provide output to the operator of the imaging apparatus 10. For example, the display 52 can allow the operator to observe reconstructed patient images and other information, such as imaging or scan parameters, related to operation of the imaging apparatus 10.

As shown in FIG. 3, the imaging apparatus 10 further includes a controller (indicated generally as 60) operatively coupled to one or more components of the imaging apparatus 10. The controller 60 controls the overall functioning and operation of the imaging apparatus 10, including providing power and timing signals to the radiation source 30 and a gantry motor controller that controls rotational speed and position of the rotatable gantry 12. It will be appreciated that the controller 60 can encompass one or more of the following: a patient support controller, a gantry controller, a controller coupled to the radiation source 30, a controller coupled to the radiation detector 34, and the like. In any of the aspects disclosed herein, the controller 60 is a system controller that can control other components, devices, and/or controllers.

Although depicted in FIG. 3 as being separate components, in any of the aspects disclosed herein, the image processing system 40, the operator interface 48, the display 52, the controller 60 and/or other components may be combined into one or more components or devices.

The apparatus 10 may include various components, logic, and software. For example, in various aspects, the controller 60 comprises a processor, a memory, and software. By way of example and not limitation, when the imaging system is incorporated into a multimodal apparatus and/or radiotherapy system, the multimodal apparatus and/or radiotherapy system can include various other devices and components (e.g., gantries, radiation sources, collimators, detectors, controllers, power sources, patient supports, among others) that can implement one or more routines or steps related to imaging and/or IGRT for a specific application. Furthermore, the controller(s) can directly or indirectly control one or more devices and/or components in accordance with one or more routines or processes stored in memory.

Moreover, those skilled in the art will appreciate that the systems and methods may be implemented with other computer system configurations. The illustrated aspects of the invention may be practiced in distributed computing environments where certain tasks are performed by local or remote processing devices that are linked through a communications network. For example, the image processing system 40 may be associated with a separate system. In a distributed computing environment, program modules may be located in both local and remote memory storage devices. For instance, a remote database, a local database, a cloud-computing platform, a cloud database, or a combination thereof can be utilized with the imaging apparatus 10.

The imaging apparatus 10 can utilize an exemplary environment for implementing various aspects of the invention including a computer, wherein the computer includes the controller 60 (e.g., including a processor and a memory, which may be memory 44) and a system bus. The system bus can couple system components including, but not limited to the memory to the processor, and can communicate with other systems, controllers, components, devices, and processors. Memory can include read only memory (ROM), random access memory (RAM), hard drives, flash drives, and any other form of computer readable media. Memory can store various software and data, including routines and parameters, which may comprise, for example, a treatment plan.

Although various aspects disclosed herein are described with reference to imaging systems including a single radiation source and a single detector, it is contemplated that any of the aspects disclosed herein may be implemented in a multimodal apparatus that includes an imaging system 10, such as IGRT systems and other multimodal systems that may be configured to image and/or treat the same volume with the same apparatus. Accordingly, various combinations of gantries, radiation sources, and radiation detectors may be combined into a variety of configurations to image and/or treat the same volume within the same apparatus. For example, kiloelectron volt (keV) and megaelectron volt (MeV) radiation sources can be mounted on the same or different gantries of the gantry system and selectively used for imaging and/or treatment as part of an IGRT system. Example multimodal systems may include, for example, those described in U.S. Patent No. 11,154,269, entitled "Multimodal radiation apparatus and methods," the entire contents of which is hereby incorporated by reference.

### Image Processing System

As described above, in various aspects, the imaging apparatus 10 and other CT scan devices include at least one radiation detector 34, which may be, for example, a flat panel detector.

During image data acquisition, both the radiation source 30 and radiation detector 34 move along an angular path as the gantry 12 rotates. The radiation source 30 and detector 34 may move along their respective paths in a synchronized manner. Data is collected at various positions along the angular path.

At each position, the radiation detector 34 will spend a period of time to collect an appropriate type of data. The data type may be image data I, which is data relating to the traversal of radiation from the radiation source 30 through an object of interest (not shown). Image data I tends to be diagnostic data related to a patient. However, other data may be obtained in the context of the present disclosure. Image data I can be reconstructed to form a 3D representation of the patient using tomographic methods. To detect image I data, the radiation source 30 must be powered up and emitting radiation. Alternatively, the data type may be background B data. Background B data is the data detected by the radiation detector 34 when the radiation source 30 is powered off.

The data is collected by the radiation detector 34 and provided to the image processing system 40, which generates an image using the data. In various aspects, a patient scan has a physical scan field-of-view (scanFOV). The data received by the image processing system 40 may be projection data corresponding to scanFOV. Volume images can be generated using various image reconstruction techniques, such as analytical image reconstruction methods, iterative image reconstruction methods, or deep-learning based image reconstruction methods. As used herein, the scan field-of-view (scanFOV) refers to the area of interest that is scanned using the radiation source 30 and the radiation detector 34 in a single scan. In various aspects, an image generated using the projection data corresponding to scanFOV may be trans-axially truncated, as shown in FIG. 2A.

Trans-axially truncated scans may be the result of, for example, patients with a large size or in an off-set position in the imaging apparatus. In FIG. 2A, the patient's arm on the right of the image is truncated, with only a portion being shown in the image. The use of conventional truncation compensation processes can produce an image such as is shown in FIG. 2B by estimating data outside of the scanFOV. However, as shown in FIG. 2B, the estimated data resulting from the conventional process leads to an image that is blurry, as a result of the estimate, the patient's arm appears ill-defined and contains artifacts that are not desirable.

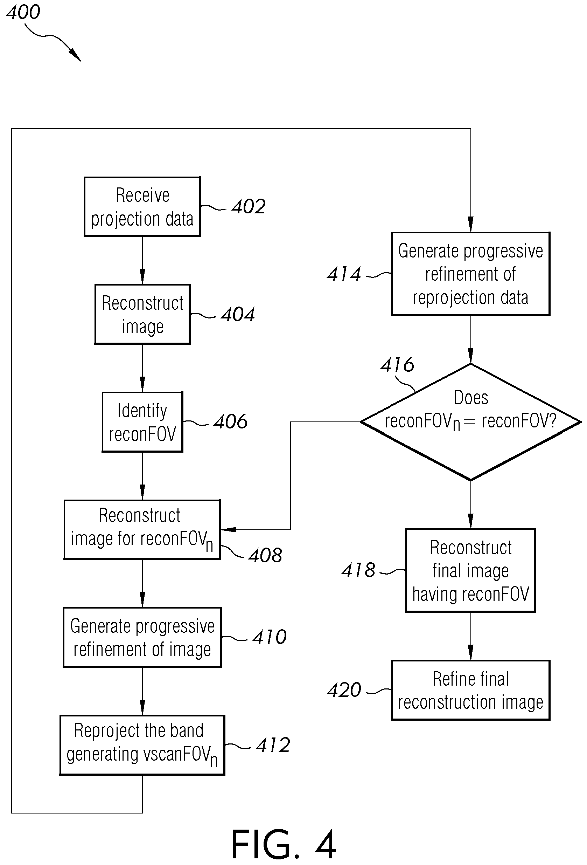

Accordingly, in various aspects, the image processing system 40 employs a progressive approach to reconstruct the image and estimate truncated data in an interleaved manner. The image processing method for estimating truncated data will be described with reference to FIGS. 4-9. The image processing method in accordance with various aspects herein estimates data beyond the acquired projection data by an amount corresponding to a targeted virtual scan field-of-view (vscanFOV) using a series of progressive steps to reach the targeted vscanFOV. At each step in the method, the image is reconstructed using a reconstruction field-of-view (reconFOV) that is only slightly larger than the previous step, and at the last progressive step, the reconFOV reaches the targeted vscanFOV. As the data for each step is refined and used to estimate the data used in later steps, the resulting image has improved definition and reduced artifacts as compared to an image produced using conventional truncation compensation.

In particular, an image processing method 400 according to various aspects is depicted in FIG. 4. The method 400 begins with receiving projection data at 402. The patient scan has a physical scan field-of-view (scanFOV). In various aspects, the projection data may be received by the image processing system 40 from the radiation detector 34. The projection data corresponds to scanFOV. As used herein, the scan field-of-view (scanFOV) refers to the area of interest that is scanned using the radiation source 30 and the radiation detector 34 in a single scan.

The image processing system 40 reconstructs an image from the projection data at 404. An example image reconstruction is shown in FIG. 2A. As set forth above, FIG. 2A is a CT scan of a patient using a scanFOV of 44 cm. As shown in FIG. 2A, the image is trans-axially truncated. In various aspects, the image reconstructed from the projection data can be said to have a reconstruction field-of-view (reconFOV₀) that is equal to (e.g., the same as) scanFOV. For clarity, in any of the aspects disclosed herein, reference to projection data is made with reference to a virtual scan field-of-view (vscanFOV), while reference to the image is made to reconFOV.

In various aspects, the image processing system 40 identifies a reconstruction field-of-view (reconFOV) at 406. As used herein, the final reconstruction field-of-view refers to the area of interest to be displayed after reconstruction on the display. In various aspects, the reconFOV is sized to fully encompass, but not truncate in the transaxial direction, the area of interest. In the example described herein, the desired reconFOV is 60 cm, although it should be appreciated that the desired reconFOV may be any value larger than the scanFOV.

The image processing system 40 also determines a number of progressive refinements based on the difference between reconFOV and scanFOV. For example, the difference between the reconFOV and the scanFOV (e.g., 16 cm) is broken down into a number of smaller bands for progressive estimation. In the present example, the difference is broken into four smaller bands of 4 cm, since the value is easily divided by four. However, it should be appreciated that any number and size of bands can be selected, depending on, for example, the difference between the reconFOV and the scanFOV, the computational power available for the process, and the like. In any of the aspects disclosed herein, the number of progressive refinements is greater than one or greater than two. For example, the image processing system 40 can use three, four, five, or more progressive refinements, depending on the particular implementation.

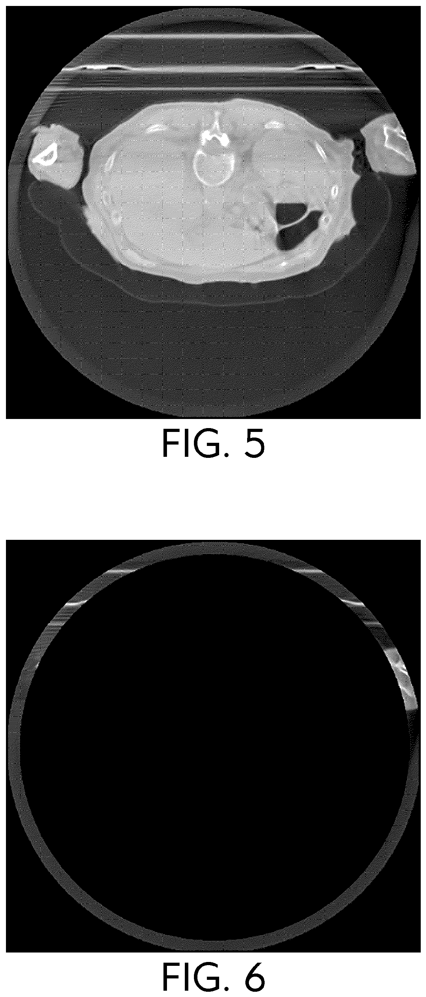

In various aspects, for the first progressive step at 408, the image processing system 40 reconstructs the image from the original projection data received in step 402 using a first reconstruction field-of-view (reconFOV₁) that is one band larger than the scanFOV. In the present example, the image is reconstructed using a reconFOV₁ of 48 cm and corresponds to vscanFOV₁. The reconstructed image is shown in FIG. 5. In the image shown in FIG. 5, the data used to reconstruct the image in the band between the scanFOV and the vscanFOV₁ is estimated data. The band between scanFOV and vscanFOV₁ for the image in FIG. 5 is shown in FIG. 6.

Next, at 410, the image processing system 40 generates a progressive refinement of the image by refining the estimated data used to reconstruct the band for reconFOV₁. In any of the aspects disclosed herein, the pixel values present in the band between reconFOV₁ and scanFOV can be adjusted using prior knowledge, which can include, by way of example and not limitation, information regarding a subject of the imaging, such as estimated pixel values corresponding to bone, soft tissue, the patient support (e.g., couch), metal, and the like. Information regarding the subject of the imaging can be based on values stored in the memory, previously-obtained images, or the like. In aspects, body surface curvature from the image of the previous progressive step may also be used to adjust the pixel values. Other sources for estimating values are contemplated and possible. Value adjustment can be done in any one of a number of ways, such as by using continuity at the truncation edge, scaling of soft tissue average to the same as the average of the soft tissue near, but inside of, the truncation edge.

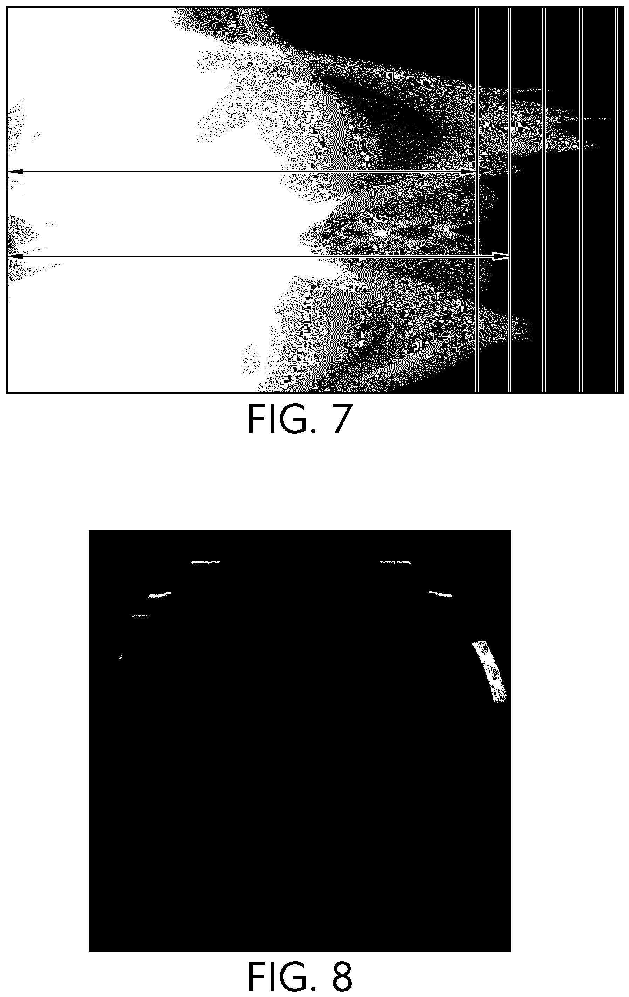

FIG. 7 depicts a sinogram corresponding to the imaging data, having the various progressive steps represented as vertical lines. The spacing between each set of vertical lines corresponds to a band. Accordingly, at 410, the image processing system 40 may refine the values within current band so that the values within the band correspond more closely to the sinogram present to the right of the band (e.g., the sinogram of the projection data from the previous progressive step).

At 412, the image processing system 40 reprojects the image (including the band between the edge of reconFOVₙ₋₁ and reconFOVₙ) refined using the adjustments generated in 410. In various aspects, the reprojection is more accurate than the conventional truncation data estimate. The reprojected data, along with the original projection data received at 402, serves as the data for the first virtual scan field-of-view (vscanFOV₁). In various aspects, the reprojection may also use the calibrated scan geometry of the system from which scanFOV was generated. In some aspects, the reprojection may use a calibrated imaging chain with knowledge on the x-ray spectrum, flat filter, bowtie filter, and detector response. Additionally or alternatively, the reprojection may use a simplified imaging chain with an estimated mono-energy x-ray beam. A rreconstructed band between scanFOV and reconFOV₁ for the image in FIG. 5 is shown in FIG. 8. In FIG. 8, the pixel values have been adjusted using prior information, and the improvement over the originally estimated band can be seen by comparing FIG. 6 with FIG. 8.

At 414, the image processing system 40 generates a progressive refinement of the reprojection data by refining the virtual scan vscanFOVₙ data. For example, local curvature data (e.g., curvature of a sinogram of the projection data from a virtual scan of the previous progressive step vscanFOVₙ₋₁) may be used to adjust the shape of the estimated projection data in the current step.

The process continues repeating the steps of reconstructing an image having a reconstruction field-of-view (reconFOVₙ) using projection data from the virtual scan that precedes the reconstruction (vscanFOVₙ₋₁) and estimated data between vscanFOVₙ and vscanFOVₙ₋₁, generating a progressive refinement for the estimated data, reprojecting the progressive refinement over the area between reconFOVₙ₋₁ and reconFOVₙ, thereby generating vscanFOVₙ, and refining the reprojection data for the subsequent reconstruction until reconFOV is reached, with n being incremented for each repetition. Put another way, following generation of vscanFOVn, at 416, the image processing system determines whether reconFOVₙ is equal to reconFOV. When reconFOVₙ is not equal to reconFOV (e.g., a "no" at 416), the process returns to reconstruction as described in 408 for the next progressive step, where the image is reconstructed for the next progressive step (e.g., reconFOV₂). In the present example, the image processing system 40 reconstructs a second progressive step with reconFOV₂ that is 52 cm (e.g., 4 cm larger than reconFOV₁). The image processing system 40 generates a progressive refinement for the estimated data used to reconstruct the band for reconFOV₂. As above, the pixel values present in the band between reconFOV₂ and reconFOV₁ can be adjusted using prior knowledge, including using information from reconFOV₁. In any of the aspects disclosed herein, the progressive refinement of the image reconFOVₙ may include adjusting pixel values using the reconstructed image from a preceding reconstruction (reconFOVₙ₋₁). Then, at 412, the image processing system 40 reprojects the reconstructed image reconFOVₙ to generate the virtual scan vscanFOVₙ data and the image processing system 40 refines the virtual scan vscanFOVₙ data.

However, when reconFOVₙ is equal to reconFOV (e.g., a "yes" at 416), the image processing system 40 reconstructs the final image having reconFOV at 418. In various aspects, the final image does not include, or includes reduced, trans-axial truncation. At 420, the image processing system 40 refines the final reconstruction image. In any of the aspects herein, the refinement of the final reconstruction image can be performed using any one or more of the methods described above with respect to step 410.

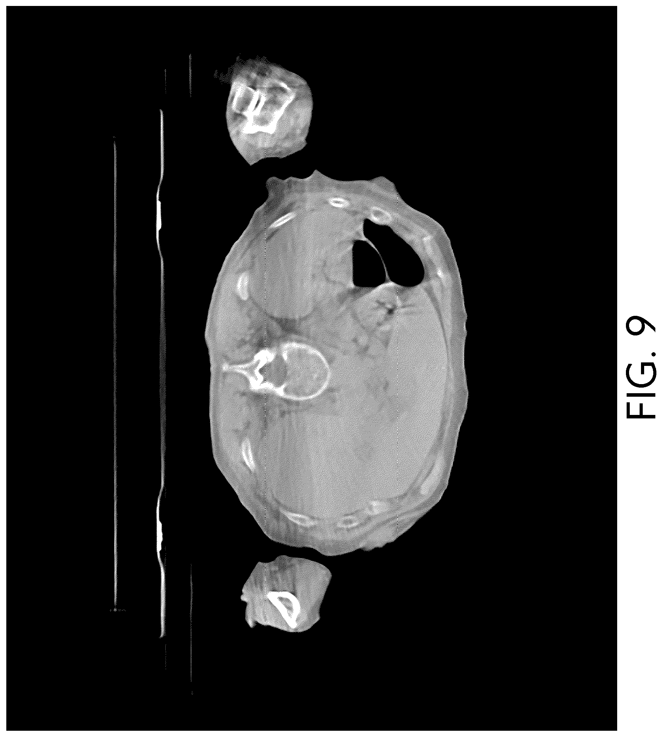

By comparing the image of FIG. 9, which was generated using the reconFOV and refinement, to the image of FIG. 2B, the impact of various aspects disclosed herein can clearly be observed. In particular, in FIG. 2B, the edge of the patient's arm appears fuzzy and lacks definition, while the image in FIG. 9 depicts the edge of the arm in a more crisp, clear manner, with improved shape and value recovery.

Although the disclosed technology has been shown and described with respect to a certain aspects, it is obvious that equivalent alterations and modifications will occur to others skilled in the art upon the reading and understanding of this specification and the annexed drawings. In particular regard to the various functions performed by the above described elements (components, assemblies, devices, members, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary aspects of the disclosed technology. In addition, while a particular feature of the disclosed technology may have been described above with respect to only one or more of several illustrated aspects, such feature may be combined with one or more other features of the other aspects, as may be desired and advantageous for any given or particular application.

While the various aspects discussed herein have been related to the systems and methods discussed above, these aspects are intended to be exemplary and are not intended to limit the applicability of these aspects to only those discussions set forth herein. While the present invention has been illustrated by the description of various aspects thereof, and while the aspects have been described in some detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus and methods, and illustrative examples shown and described. Accordingly, departures may be made from such details without departing from the spirit or scope of the applicant's general inventive concept.

## Claims

1. An imaging apparatus, comprising:
a rotatable gantry system positioned at least partially around a patient support;
a radiation source coupled to the rotatable gantry system, the radiation source configured for imaging radiation;
a radiation detector coupled to the rotatable gantry system and positioned to receive radiation from the radiation source; and
an image processing system configured to:
receive projection data from the radiation detector, the projection data corresponding to a scan field-of-view (scanFOV), wherein an image reconstructed from the projection data has a reconstruction field-of-view reconFOV₀ that is the same as scanFOV, and the image is trans-axially truncated;
identify a final reconstruction field-of-view (reconFOV) that is larger than the scanFOV;
reconstruct an image having a reconstruction field-of-view (reconFOVₙ) using projection data from a virtual scan that precedes the reconstruction (vscanFOVₙ₋₁) and estimated data between the vscanFOVₙ₋₁ and vscanFOVₙ, wherein reconFOVₙ is less than reconFOV;
generate a progressive refinement for the image;
reproject the image with the progressive refinement thereby generating a virtual scan vscanFOVₙ;
refine the virtual scan vscanFOVₙ data; and
repeat the reconstruction, generation of the progressive refinement, and reprojection for one or more subsequent reconstructions until reconFOV is reached.

2. The imaging apparatus according to claim 1, wherein the image processing system is configured to generate the progressive refinement for the image by adjusting pixel values of the estimated data using information regarding a subject of the imaging or by adjusting pixel values using the reconstructed image from a preceding reconstruction reconFOVₙ₋₁.

3. The imaging apparatus according to claim 1 or claim 2, wherein the information regarding the subject of the imaging comprises information regarding estimated pixel values corresponding to bone, soft tissue, the patient support, and metal.

4. The imaging apparatus according to claim 1 or claim 2, wherein the image processing system is further configured to:
determine a number of progressive refinements based on the difference between reconFOV and scanFOV.

5. The imaging apparatus according to claim 4, wherein the number of progressive refinements is greater than one.

6. The imaging apparatus according to claim 1 or claim 2, wherein the image processing system is further configured to:
reconstruct a first progressive image over a first reconstruction field-of-view (reconFOV₁) from the projection data corresponding to the scanFOV, wherein a difference between vscanFOV₁ and scanFOV corresponds to a first refinement segment of the image.

7. The imaging apparatus according to claim 1 or claim 2, wherein the image processing system is further configured to:
reconstruct a final image having reconFOV, wherein the final image is not trans-axially truncated.

8. The imaging apparatus according to claim 1 or claim 2, refining the virtual scan vscanFOVₙ data comprises using curvature of a sinogram of projection data from a virtual scan that precedes the reconstruction (vscanFOVₙ₋₁) to adjust a shape of estimated projection data for vscanFOVₙ.

9. A multimodal imaging apparatus comprising the imaging apparatus of claim 1.

10. An image processing method comprising:
receiving projection data from a radiation detector, the projection data corresponding to a scan field-of-view (scanFOV), wherein an image reconstructed from the projection data has a reconstruction field-of-view (reconFOV₀) that is the same as scanFOV, and the image is trans-axially truncated;
identifying a final reconstruction field-of-view (reconFOV) that is larger than the scanFOV;
reconstructing an image having a reconstruction field-of-view (reconFOVₙ) using projection data from a virtual scan that precedes the reconstruction (vscanFOVₙ₋₁) and estimated data between the vscanFOVₙ₋₁ and vscanFOVₙ, wherein reconFOVₙ is less than reconFOV, and reconFOVₙ is equal to vscanFOVₙ;
generating a progressive refinement for the image;
reprojecting the image with the progressive refinement thereby generating a virtual scan vscanFOVₙ;
refining the virtual scan vscanFOVₙ data; and
repeating the reconstructing, generating the progressive refinement, and reprojecting for one or more subsequent reconstructions until reconFOV is reached.

11. The image processing method of claim 10, wherein generating the progressive refinement for the image comprises adjusting pixel values of the estimated data using information regarding a subject of the imaging.

12. The image processing method of claim 11, wherein the information regarding the subject of the imaging comprises information regarding estimated pixel values corresponding to bone, soft tissue, the patient support, and metal.

13. The image processing method of claim 10, wherein generating the progressive refinement for the image reconFOVₙ by adjusting pixel values using the reconstructed image from a preceding reconstruction reconFOVₙ₋₁ or adjusting a shape of an object recovered in the image using body surface curvature information from vscanFOVₙ₋₁.

14. The image processing method of claim 10, wherein the image processing method further comprises:
determining a number of progressive refinements based on the difference between reconFOV and scanFOV, and wherein the number of progressive refinements is greater than one.

15. The image processing method of claim 10, wherein the image processing method further comprises:
reconstructing a first progressive image over a first reconstruction field-of-view (reconFOV₁) from the projection data corresponding to the scanFOV, wherein a difference between vscanFOV₁ and scanFOV corresponds to a first refinement segment.
